Europäisches Patentamt

European Patent Office

Office européen des brevets

(11) Veröffentlichungsnummer: **0 330 945**
A1

# EUROPÄISCHE PATENTANMELDUNG

(21) Anmeldenummer: 89102858.1

(22) Anmeldetag: 18.02.89

(51) Int. Cl.4: **B23D 77/12 , B23D 77/00**

(30) Priorität: 24.02.88 DE 3805726

(43) Veröffentlichungstag der Anmeldung:
06.09.89 Patentblatt 89/36

(84) Benannte Vertragsstaaten:
AT DE ES FR GB IT SE

(71) Anmelder: Krauss, Helmut Dipl.-Ing.
Bartningallee 26
D-1000 Berlin 21(DE)

(72) Erfinder: Krauss, Helmut Dipl.-Ing.
Bartningallee 26
D-1000 Berlin 21(DE)

(74) Vertreter: LOUIS, PÖHLAU, LOHRENTZ &
SEGETH
Kesslerplatz 1 Postfach 3055
D-8500 Nürnberg(DE)

(54) **Bohr- bzw. Reibwerkzeug.**

(57) Es wird ein Bohr- bzw. Reibwerkzeug (10) mit Schneidrippen (12) und Spanrillen (14) beschrieben, die sich entlang des Umfangs des Werkzeugs (10) abwechseln und die in Längsrichtung des Werkzeugs (10) einen Drall mit einer Steigung (s) aufweisen. Die Schneidrippen (12) definieren während einer Rotation des Werkzeugs (10) eine konische Mantelfläche (26). Damit die Durchmesser des Werkzeugs (10) in seiner Längsrichtung ihren Sollwerten entsprechen, ist die Steigung (s) der gedrallten Schneidrippen (12) und Spanrillen (14) über die Länge des Werkzeugs (10) nicht konstant, sondern sie ändert sich.

FIG.1

EP 0 330 945 A1

## Bohr- bzw. Reibwerkzeug

Die Erfindung betrifft ein Werkzeug in Form eines konischen Bohrers bzw. insbesondere in Form einer konischen Reibahle, mit Schneidrippen, die wähend einer Rotation des Werkzeugs eine konische Mantelfläche festlegen, und mit Spanrillen, wobei sich die Schneidrippen und die Spanrillen entlang des Umfangs des Werkzeugs abwechseln und in Längsrichtung des Werkzeugs einen Drall mit einer Steigung aufweisen.

Derartige Werkzeuge weisen eine relativ geringe Konizität auf, wobei die Steigung der einen Drall aufweisenden Schneidrippen und Spanrillen in Längsrichtung des Werkzeugs konstant ist. Ein Werkzeug mit einer konstanten Steigung des Dralls der Spanrillen und somit der Schneidrippen ist relativ einfach herstellbar. Dabei wird die Steigung bei einem bestimmten Durchmesser des Werkzeugs festgelegt, d.h. die Drallsteigung ist auf diesen bestimmten Durchmesser bezogen. Da ein solches konisches Werkzeug jedoch auch kleinere sowie grössere Durchmesser als diesen einen Bezugsdurchmesser besitzt, ergibt sich bei den bekannten konischen Werkzeugen mit konstanter Drallsteigung der Mangel, dass alle von dem einen Durchmesser verschiedenen Durchmesser des Werkzeugs, auf den die konstante Steigung bezogen ist, kleiner oder grösser sind als die gewünschten Solldurchmesser. Die Drallsteigung eines solchen Werkzeuges ist zum Umfang des Werkzeugs direkt und zum Tangens des Drallwinkels umgekehrt proportional. Da die Steigung eines solchen bekannten Werkzeuges -wie ausgeführt wurde- auf einen bestimmten Durchmesser bezogen ist, müsste die Drallsteigung bei einem grösseren Durchmesser als dem Durchmesser, auf den die konstante Steigung bezogen ist, grösser bzw. bei einem kleineren Durchmesser als diesem Bezugsdurchmesser kleiner sein. Nachdem bei den bekannten konischen Werkzeugen die Steigung jedoch konstant ist, folgt, dass bei einer konstanten Drallsteigung die Durchmesser, die grösser sind als der Bezugsdurchmesser zu klein und dass die Durchmesser, die kleiner sind als der Bezugsdurchmesser, auf den die Steigung bezogen ist, grösser sind als die gewünschten Solldurchmesser.

Deshalb liegt der Erfindung die Aufgabe zugrunde, ein Werkzeug der eingangs genannten Art zu schaffen, bei dem die Abweichungen zwischen den Solldurchmessern und den Istdurchmessern entlang der gesamten Länge des Werkzeugs eliminiert sind.

Diese Aufgabe wird erfindungsgemäss dadurch gelöst, dass die Steigung der Schneidrippen sich in Längsrichtung des Werkzeuges ändert. Durch die nicht konstante Ausbildung der Steigung der Schneidrippen werden die durch die konstante Drallsteigung gegebenen Mängel, dass grössere Durchmesser als der Bezugsdurchmesser kleiner sind als die gewünschten Solldurchmesser, und umgekehrt, vermieden

Beim erfindungsgemässen Werkzeug ist die Steigung der Schneidrippen vorzugsweise vom sich in Längsrichtung des Werkzeugs ändernden Durchmesser der Mantelfläche abhängig. Dabei kann die Steigung der Schneidrippen zum jeweiligen Durchmesser der Mantelfläche proportional sein. Dann ändert sich die Steigung der Schneidrippen in Längsrichtung des Werkzeugs kontinuierlich. Es ist jedoch auch möglich, dass die Steigung der Schneidrippen innerhalb bestimmter Längsabschnitte des Werkzeugs von einem Durchmesser der Mantelfläche dieses Abschnittes abhängig und konstant ist. Bei einer derartigen Ausbildung des Werkzeugs ergeben sich somit Längsabschnitte, innerhalb welchen die Steigung konstant ist. Der Übergang der Drallsteigung von einem solchen Längsabschnitt des Werkzeugs zum benachbarten Längsabschnitt kann stufenweise oder verlaufend sein. Es ist jedoch auch möglich, dass sich die Drallsteigung in Längsrichtung des Werkzeugs weder linear noch stufenweise sondern beliebig anders ändert. Die Auswahl des Verlaufes der Drallsteigung in Längsrichtung des Werkzeugs hängt vom Einsatzgebiet des Werkzeugs ab. Ein erfindungsgemässes Werkzeug ist durch geeignete Programmierung einer CNC-Werkzeugmaschine herstellbar. Es ergibt sich ein Werkzeug, bei dem jeder Durchmesser dem gewünschten Solldurchmesser an jedem Ort in Längsrichtung des Werkzeuges genau entspricht. Damit ergibt sich der weitere Vorteil, dass die Abnutzung des konischen Werkzeuges in seiner Längsrichtung überall gleich gross ist.

Weitere Einzelheiten, Merkmale und Vorteile ergeben sich aus der nachfolgenden Beschreibung eines in der Zeichnung dargestellten Ausführungsbeispieles des erfindungsgemässen konischen Werkzeugs mit gedrallten Schneidrippen und Spanrillen. Es zeigt:

Fig. 1 eine Seitenansicht eines Werkzeugs in Form einer konischen Reibahle,

Fig. 2 einen Schnitt entlang der Schnittlinie II-II durch eine abschnittweise dargestellte Schneidrippe,

Fig. 3 eine schematische Darstellung der während einer Rotation des Werkzeugs durch die Schneidrippen erzeugten konischen Mantelfläche des Werkzeugs,

Fig. 4 eine Diagrammdarstellung zur Verdeutlichung der Drallsteigung der/jeder Schneidrippe, und

Fig. 5 eine grafische Darstellung der Abhängigkeit der Drallsteigung von der Längsrichtung und damit von dem jeweiligen Durchmesser des konischen Werkzeugs.

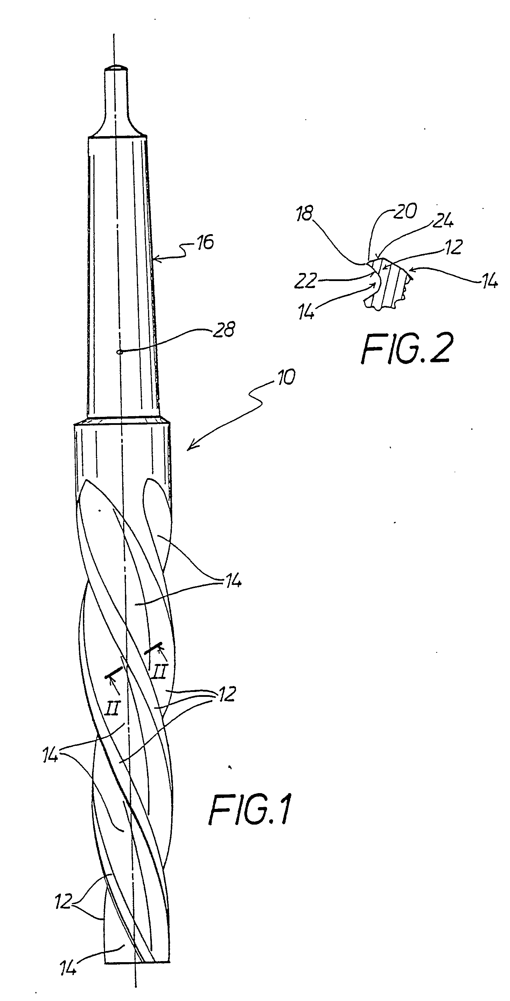

Figur 1 zeigt ein Werkzeug 10 in Form einer konischen Reibahle, die Schneidrippen 12 und Spanrillen 14 aufweist, die mit einem Drall ausgebildet sind. Mit der Bezugsziffer 16 ist ein sog. Morsekegel bezeichnet, mit dem das Schneidwerkzeug 10 in einer (nicht dargestellten) Werkzeughalterung befestigbar ist.

Die Schneidrippen 12 und die Spanrillen 14 sind entlang des Umfangs des Werkzeuges 10 gleichmässig verteilt.

Figur 2 zeigt in einem Querschnitt eine Schneidrippe 12 und eine Spanrille 14. Die Schneidrippe 12 weist eine Schneidkante 18 auf, an die sich auf der einen Seite eine sog. Rundschliffphase 20 anschliesst. Mit der Bezugsziffer 22 ist die Spanfläche der Schneidrippe 12 bezeichnet. An die Rundschliffphase 20 schliesst sich eine Freifläche 24 an. Die Freifläche 24 ist abgewinkelt ausgebildet und mündet in eine weitere Spanrille 14 ein.

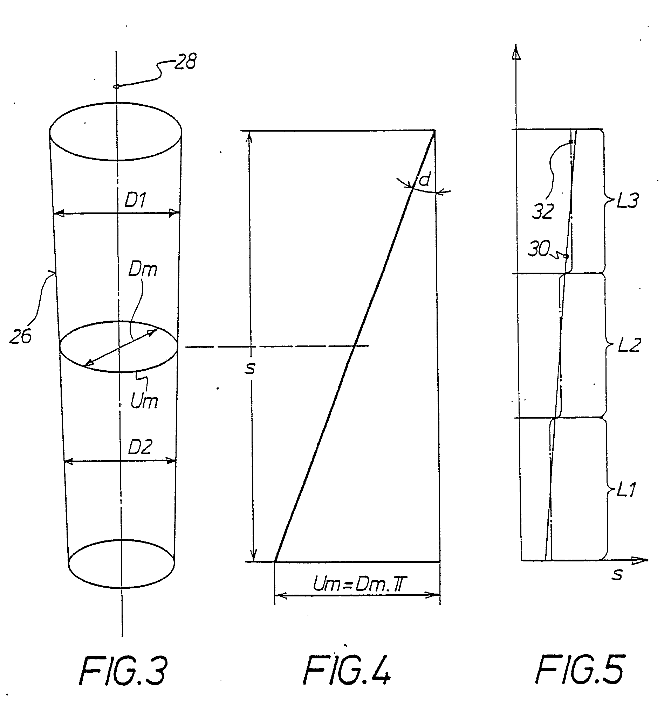

Figur 3 zeigt in einer räumlichen Darstellung die konische Mantelfläche 26, die von den Schneidrippen 12 bzw. von den Schneidkanten 18 mit den Rundschliffphasen 20 der Schneidrippen 12 des Schneidwerkzeuges 10 während einer Rotation des Werkzeuges 10 um seine Längsachse 28 (sh. auch Figur 1) bestimmt ist.

Bei bekannten konischen Werkzeugen 10 wird die Steigung s der Schneidrippen 12 bzw. der Spanrillen 14 bei einem bestimmten Durchmesser der Mantelfläche 26 festgelegt. In Figur 3 ist ein derartiger Durchmesser mit Dm bezeichnet. Wie aus Figur 4 ersichtlich ist, ergibt sich der Tangens des Drallwinkels d aus dem dem mittleren Durchmesser Dm entsprechenden Umfang Um der Mantelfläche 26.und der Steigung s. Bei den bekannten konischen Werkzeugen 10 ist die Steigung s in Längsrichtung des Werkzeugs 10 konstant. Bei einem Durchmesser D1, der grösser ist als Dm, müsste die Steigung s demnach grösser sein als die auf den Durchmesser Dm bezogene konstante Steigung s. Da das bei einer über die gesamte Länge des Werkzeugs konstanten Steigung s nicht der Fall ist, ist bei den bekannten Werkzeugen der gattungsgemässen Art deshalb der Istwert des Durchmessers D1 kleiner als sein Sollwert. Die entsprechenden Überlegungen gelten für alle Durchmesser D2, die kleiner sind als der Bezugsdurchmesser Dm, so dass auch die Istwerte der Durchmesser D2 nicht ihren Sollwerten entsprechen. Deshalb wird vorgeschlagen, die Steigung s in Längsrichtung des Werkzeuges 10 veränderlich auszubilden, wobei in Figur 5 zwei Zusammenhänge zwischen der Steigung s und der Längsrichtung des Werkzeuges 10 in einer Funktionsdarstellung gezeichnet sind. Bei einer Ausbildung des Werkzeuges 10 ist die Steigung s zum jeweiligen Durchmesser D der Mantelfläche 26 direkt proportional. Dieser Zusammenhang ist durch die Linie 30 dargestellt. Bei einer anderen Ausbildung des Werkzeuges 10 ist die Steigung s innerhalb bestimmter Längsabschnitte L1, L2 und L3 konstant, wobei die Steigungen s in diesen Längsabschnitten L1 bis L3 voneinander verschieden sind, d.h. bei grösser werdendem Durchmesser D der Mantelfläche 26 zunehmen. Diese stufenweise Änderung der Steigung s in Längsrichtung des Werkzeuges 10, d.h.in Richtung der Längsachse 28 des Werkzeuges 10 ist in Figur 5 durch die strichpunktierte Linie 32 verdeutlicht.

## Ansprüche

1. Werkzeug in Form eines konischen Bohrers bzw. insbesondere in Form einer konischen Reibahle, mit Schneidrippen (12), die während einer Rotation des Werkzeugs (10) eine konische Mantelfläche (26) festlegen, und mit Spanrillen (14), wobei sich die Schneidrippen (12) und die Spanrillen (14) entlang des Umfangs des Werkzeuges (10) abwechseln und in Längsrichtung des Werkzeugs (10) einen Drall mit einer Steigung (s) aufweisen,
**dadurch gekennzeichnet,**
dass die Steigung (s) der Schneidrippen (12) sich in Längsrichtung des Werkzeugs (10) ändert.

2. Werkzeug nach Anspruch 1,
**dadurch gekennzeichnet,**
dass die Steigung (s) der Schneidrippen (12) vom sich in Längsrichtung des Werkzeugs (10) ändernden Durchmesser (D) der Mantelfläche (26) abhängig ist.

3. Werkzeug nach Anspruch 1 oder 2,
**dadurch gekennzeichnet,**
dass die Steigung (s) der Schneidrippen (12) zum jeweiligen Durchmesser (D) der Mantelfläche (26) proportional ist.

4. Werkzeug nach Anspruch 1 oder 2,
**dadurch gekennzeichnet,**
dass die Steigung (s) der Schneidrippen (12) innerhalb bestimmter Längsabschnitte (L1, L2, L3,...) des Werkzeugs (10) von einem Durchmesser (D) der Mantelfläche (26) dieses Abschnittes (L1, L2, L3,...) abhängig und konstant ist.

16

28

10

18 20 24
22 12
14 14

FIG.2

14

12

II

II

14

FIG.1

12

14

12

14

*FIG.3*

$Um = Dm.\pi$

*FIG.4*

*FIG.5*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A- 702 342 (FAURIE) <br> * Ansprüche 1-3; Figuren 1-3 * | 1-3 | B 23 D 77/12 <br> B 23 D 77/00 |
| A | | 4 | |
| | --- | | |
| X | AT-B- 103 886 (WESSELMANN-BOHRER) <br> * gesamtes Dokument * | 1-2 | |
| | --- | | |
| X | US-A-2 258 674 (CESKA) <br> * Seite 1, Spalte 2, Zeilen 10-28; Figur 1; Ansprüche 1,2 * | 1 | |
| | ----- | | |

RECHERCHIERTE SACHGEBIETE (Int. Cl.4)

B 23 D 77/00
B 23 B 51/00

Der vorliegende Recherchenbericht wurde für alle Patentansprüche erstellt

| Recherchenort | Abschlußdatum der Recherche | Prüfer |
|---|---|---|
| BERLIN | 19-05-1989 | BERNAS Y.N.E. |